# EUROPEAN PATENT APPLICATION

(11) **EP 4 738 714 A1**
(43) Date of publication of application: **06.05.2026**
(21) Application number: 24867172.9
(22) Date of filing: 13.08.2024
(51) Int. Cl.: H04B 1/401

(54) **ANTENNA STATE CONTROL METHOD, AND CHIP, ELECTRONIC DEVICE AND READABLE STORAGE MEDIUM**

(30) Priority: 18.09.2023 CN 202311200143
(71) Applicant: Honor Device Co., Ltd., Shenzhen, Guangdong 518040 (CN)
(72) Inventor: LIU, Shumin, Shenzhen, Guangdong 518040 (CN); LI, Yuanpeng, Shenzhen, Guangdong 518040 (CN); HUO, Qiang, Shenzhen, Guangdong 518040 (CN)
(74) Representative: Isarpatent
(86) International application number: PCT/CN2024/111876
(87) International publication number: WO 2025/060755

(57) **Abstract**

This application relates to the field of electronic technologies, and provides an antenna state control method, a chip, an electronic device, and a readable storage medium. The method includes: obtaining a pre-state of a first communication system, where the pre-state is a state that the first communication system is to enter at a second moment after a first moment; and if the pre-state is a non-working state, outputting a target antenna tuning parameter at the first moment, where the target antenna tuning parameter is used to indicate that an antenna tuning switch is in a target tuning state, the antenna tuning switch is configured to tune a tuning state of a first antenna of the first communication system, and in the target tuning state, antenna performance of a second antenna meets a preset performance requirement. In the method, the antenna performance of the second antenna can be ensured.

## Description

This application claims priority to Chinese Patent Application No. 202311200143.2, filed with the China National Intellectual Property Administration on September 18, 2023 and entitled "ANTENNA STATE CONTROL METHOD, CHIP, ELECTRONIC DEVICE, AND READABLE STORAGE MEDIUM", which is incorporated herein by reference in its entirety.

### TECHNICAL FIELD

This application relates to the field of electronic technologies, and specifically, to an antenna state control method, a chip, an electronic device, and a readable storage medium.

### BACKGROUND

To meet an increasing use requirement of people, forms of electronic devices are increasingly rich. Wearable devices, as electronic devices for daily wear, play an irreplaceable role in people's lives. Usually, the wearable device needs to have a miniaturized appearance to be suitable for daily wear, and further needs to support a plurality of communication standards to meet a plurality of communication requirements of people.

A common smartwatch is used as an example. Two antennas are usually disposed in the smartwatch. One antenna is used for cellular mobile communication, and the other antenna is used for Bluetooth communication.

However, due to a small volume of the smartwatch, the two antennas are deployed in narrow space of the smartwatch and there is mutual coupling, resulting in poor performance of the antennas and affecting communication quality.

### SUMMARY

This application provides an antenna state control method and apparatus, a chip, an electronic device, a computer-readable storage medium, and a computer program product, to improve antenna performance of a second antenna.

According to a first aspect, an antenna state control method is provided, including: obtaining a pre-state of a first communication system, where the pre-state is a state that the first communication system is to enter at a second moment after a first moment; and if the pre-state is a non-working state, outputting a target antenna tuning parameter at the first moment, where the target antenna tuning parameter is used to indicate that an antenna tuning switch is in a target tuning state, the antenna tuning switch is configured to tune a tuning state of a first antenna of the first communication system, and in the target tuning state, antenna performance of a second antenna meets a preset performance requirement.

When a Modem of the first communication system does not work, the antenna tuning switch may be switched to a switch logic state that can enable good antenna performance of the second antenna corresponding to a second communication system. In this case, the second antenna may work in a tuning state in which the antenna performance meets the preset performance requirement, to ensure communication quality of the second communication system when the first communication system does not work.

In some possible implementations, a time difference between the first moment and the second moment is less than or equal to a preset time difference threshold, to ensure that the target antenna tuning parameter effectively acts on the second antenna when the first communication system does not work, and to ensure the antenna performance of the second antenna.

In some possible implementations, the non-working state is a sleep state when the first communication system is in an idle state or a radio resource control RRC connected state.

When the Modem is in the idle (Idle) state or the RRC state, the modem periodically enters the sleep state to reduce power consumption. The Modem may output the target antenna tuning parameter at a moment before entering the sleep state to control the antenna tuning switch to switch to the switch logic state that can enable good antenna performance of the second antenna corresponding to the second communication system, to ensure that the antenna performance of the second antenna meets the preset performance requirement.

In some possible implementations, the non-working state is a sleep state in a network search cycle. When the Modem is in a network search state, the modem also periodically enters the sleep state. The Modem outputs the target antenna tuning parameter at a moment before entering the sleep state in each network search cycle to control the antenna tuning switch to switch to the switch logic state that can enable good antenna performance of the second antenna corresponding to the second communication system, to ensure that the antenna performance of the second antenna meets the preset performance requirement.

In some possible implementations, the non-working state is a state in an airplane mode. When an electronic device enters the airplane mode under an operation of a user, the electronic device does not need to perform communication of the first communication system. In this case, the Modem is in the non-working state. Before the Modem enters the non-working state, the target antenna tuning parameter may be output first to control the antenna tuning switch to remain in the target tuning state, to ensure that antenna performance of GPS+Bluetooth/Wifi can be fully exerted in the airplane mode, so as to ensure communication quality of a GPS+Bluetooth/Wifi communication system. Then, the Modem enters the non-working state.

In some possible implementations, the non-working state is that the second communication system corresponding to the second antenna is in a Bluetooth communication state.

When an electronic device is in the Bluetooth communication state or a Wifi communication state, it may be considered that there is no need to make a call, and therefore there is no need for a cellular mobile communication network. The Modem may preferentially ensure communication quality of Bluetooth communication or Wifi communication. The Modem may output the target antenna tuning parameter to control the antenna tuning switch to remain in the target tuning state, to ensure that antenna performance of GPS+Bluetooth/Wifi can be fully exerted during Bluetooth communication or Wifi communication, so as to further ensure communication quality of a GPS+Bluetooth/Wifi communication system.

In some possible implementations, a manner of outputting the target antenna tuning parameter may be outputting the target antenna tuning parameter to the antenna tuning switch by calling a close function. The close function is filled with the target antenna tuning parameter.

In some possible implementations, the non-working state is a sleep state in a network search cycle, and the outputting a target antenna tuning parameter at the first moment includes: searching for a target frequency band corresponding to the target tuning state at the first moment, to output the target antenna tuning parameter.

Specifically, after common network search is completed, search for a network on a frequency band may be added. The newly added frequency band for search is a frequency band corresponding to the target antenna tuning parameter. If an available network still cannot be found after the search for the newly added frequency band is completed, the Modem enters the sleep state. After the frequency band for search is newly added, it may be ensured that in a process in which the Modem searches for the newly added frequency band before entering the sleep state, the target antenna tuning parameter is output, to ensure that the antenna tuning switch is switched to the switch logical state that can enable good antenna performance of the second antenna corresponding to the second communication system, so as to ensure that the antenna performance of the second antenna meets the preset performance requirement.

In some possible implementations, if the pre-state is a working state, the method further includes: determining that an electronic device is in a limited service state, and outputting the target antenna tuning parameter, to register a target frequency band corresponding to the target tuning state; and if the registration succeeds, determining that the first communication system camps on the target frequency band.

When the electronic device is in the limited service state, the electronic device can camp on a limited quantity of networks. In this case, the Modem may preferentially register the target frequency band. If a network on the target frequency band can be successfully registered, the electronic device can maintain camping on the network on the target frequency band. In this way, the antenna tuning switch can maintain a state indicated by the target antenna tuning parameter, and does not change randomly, to ensure communication quality of a GPS+Bluetooth/Wifi communication system. If the network registration of the target frequency band fails, the electronic device camps based on a default frequency band in the limited service state.

In some possible implementations, before the obtaining a pre-state of a first communication system, the method further includes: determining whether a subscriber identity module card is present; and if yes, performing the step of obtaining a pre-state of a first communication system; or if no, outputting the target antenna tuning parameter.

If the subscriber identity module card is present, the foregoing procedure may be performed to control an antenna state. If the subscriber identity module card is not present, it indicates that the electronic device does not have a condition for accessing a cellular mobile communication system, and there is no need to consider selection of a matching circuit on a specific path by an antenna tuning circuit to tune the first antenna. Therefore, the Modem may directly output the target antenna tuning parameter, for example, output the target antenna tuning parameter by calling a close function. The antenna tuning switch may be configured based on the target antenna tuning parameter, to ensure that the antenna performance of the second antenna is fully exerted. It is first determined whether the subscriber identity module card is present. If the subscriber identity module card is not present, the target antenna tuning parameter is directly output. In the method, there is no need to determine a pre-state of the Modem, and a subsequent invalid procedure is avoided.

In some possible implementations, the outputting the target antenna tuning parameter includes: reporting a message indicating that the subscriber identity module card is not present to a microcontroller unit (micro controller unit, MCU); receiving a power-off instruction returned by the MCU based on the message indicating that the subscriber identity module card is not present; and in response to the power-off instruction, outputting the target antenna tuning parameter and then powering off.

In some possible implementations, that in the target tuning state, antenna performance of a second antenna meets a preset performance requirement includes: in the target tuning state, antenna efficiency of the second antenna is higher than antenna efficiency in another tuning state, where the another tuning state is a tuning state of the antenna tuning switch, and the another tuning state is different from the target tuning state.

According to a second aspect, an antenna state control apparatus is provided and includes a unit including software and/or hardware. The unit is configured to perform any method in the technical solutions in the first aspect.

According to a third aspect, an embodiment of this application provides a chip, including a processor. The processor is configured to read and execute a computer program stored in a memory, to perform any method in the technical solutions in the first aspect.

Optionally, the chip further includes the memory, and the memory is connected to the processor through a circuit or a wire.

Further, optionally, the chip further includes a communication interface.

According to a fourth aspect, an electronic device is provided. The electronic device includes a processor, a memory, and an interface. The processor, the memory, and the interface cooperate with each other, to enable the electronic device to perform any method in the technical solutions in the first aspect.

According to a fifth aspect, an electronic device is provided. The electronic device includes any chip in the technical solutions in the third aspect.

Optionally, the electronic device is a wearable device.

According to a sixth aspect, a computer-readable storage medium is provided. The computer-readable storage medium stores a computer program, and when the computer program is executed by a processor, the processor is enabled to perform any method in the technical solutions in the first aspect.

According to a seventh aspect, a computer program product is provided. The computer program product includes computer program code, and when the computer program code is run on an electronic device, the electronic device is enabled to perform any method in the technical solutions in the first aspect.

### BRIEF DESCRIPTION OF DRAWINGS

FIG. 1 is a schematic diagram of a structure of a terminal device 100 according to an embodiment of this application;
FIG. 2 is a block diagram of a software structure of a terminal device 100 according to an embodiment of this application;
FIG. 3 is a schematic diagram of a structure of an antenna solution inside an electronic device according to an embodiment of this application;
FIG. 4 is a schematic diagram of antenna distribution in the antenna solution shown in FIG. 3 according to an embodiment of this application;
FIG. 5 is a schematic diagram of a structure of another antenna solution inside an electronic device according to an embodiment of this application;
FIG. 6 is a flowchart of an antenna state control method according to an embodiment of this application;
FIG. 7 is a schematic diagram of a structure of another antenna solution inside an electronic device according to an embodiment of this application;
FIG. 8 is a schematic diagram of a working time slot of a Modem in an Idle state according to an embodiment of this application;
FIG. 9 is a schematic diagram of a working time slot of a Modem in an RRC connected state according to an embodiment of this application;
FIG. 10 is a schematic diagram of a working time slot of a Modem in a network search process after a common electronic device is detached from a network according to an embodiment of this application;
FIG. 11 is a schematic diagram of a working time slot of a Modem in a network search process after an electronic device is detached from a network according to an embodiment of this application;
FIG. 12 is a diagram of a network search procedure when an electronic device is in a limited service state according to an embodiment of this application;
FIG. 13 is a schematic diagram of a structure between modules related to an antenna state control method inside an electronic device according to an embodiment of this application;
FIG. 14 is a flowchart of another antenna state control method according to an embodiment of this application; and
FIG. 15 is a schematic diagram of a structure of an antenna state control apparatus according to an embodiment of this application.

### DESCRIPTION OF EMBODIMENTS

The following describes technical solutions in embodiments of this application with reference to the accompanying drawings in the embodiments of this application. In the descriptions of the embodiments of this application, unless otherwise specified, "/" means "or". For example, A/B may represent A or B. In this specification, "and/or" is merely an association relationship for describing associated objects, and represents that three relationships may exist. For example, A and/or B may represent the following three cases: Only A exists, both A and B exist, and only B exists. In addition, in the descriptions of the embodiments of this application, "a plurality of" means two or more.

The following terms "first", "second", and "third" are merely used for description, and cannot be understood as an indication or implication of relative importance or an implicit indication of a quantity of indicated technical features. Therefore, a feature defined with "first", "second", or "third" may explicitly or implicitly include one or more such features.

The antenna state control method provided in the embodiments of this application may be applied to a terminal device such as a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the terminal device is not limited in the embodiments of this application.

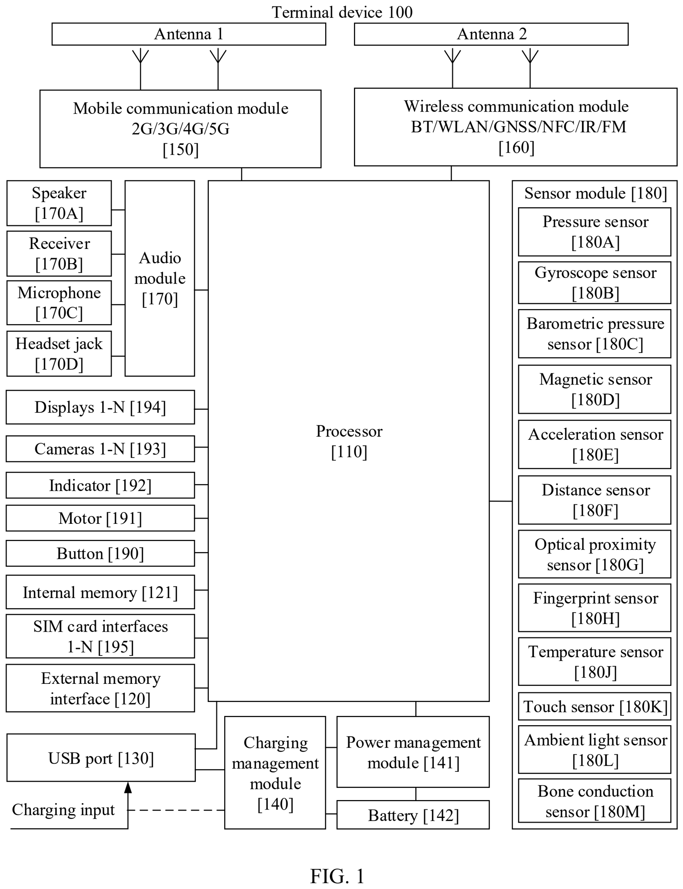

For example, FIG. 1 is a schematic diagram of a structure of a terminal device 100 according to an embodiment of this application. The terminal device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the terminal device 100. In some other embodiments of this application, the terminal device 100 may include more or fewer components than those shown in the figure, or some components may be combined, or some components may be split, or components may be arranged in different manners. The components shown in the figure may be implemented by hardware, software, or a combination of software and hardware.

A software system of the terminal device 100 may use a layered architecture, an event-driven architecture, a microkernel architecture, a micro-service architecture, or a cloud architecture. In embodiments of this application, an Android system with a layered architecture is used as an example to describe a software structure of the terminal device 100.

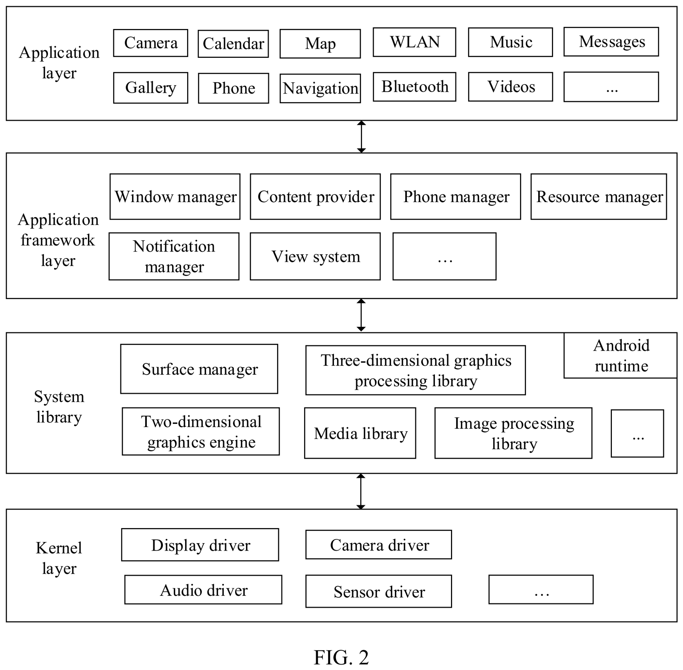

FIG. 2 is a block diagram of a software structure of a terminal device 100 according to an embodiment of this application. In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom. The application layer may include a series of application packages.

As shown in FIG. 2, the application packages may include applications such as Camera, Gallery, Calendar, Phone, Map, Navigation, WLAN, Bluetooth, Music, Videos, and Messages.

The application framework layer provides an application programming interface (application programming interface, API) and a programming framework for the application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, lock a screen, take a screenshot, and the like.

The content provider is configured to store and obtain data, and enable the data to be accessible by an application. The data may include a video, an image, audio, calls that are made and answered, a browsing history and bookmarks, a phone book, and the like.

The view system includes visual controls such as a text display control and a picture display control. The view system may be configured to construct an application. A display interface may include one or more views. For example, a display interface including an SMS message notification icon may include a view for displaying text and a view for displaying a picture.

The phone manager is configured to provide a communication function of the terminal device 100, for example, call status management (including answering, hanging up, and the like).

The resource manager provides various resources, for example, a localized string, an icon, a picture, a layout file, and a video file, for an application.

The notification manager enables an application to display notification information in the status bar, and may be configured to convey a notification-type message. The displayed notification information may automatically disappear after a short stay without user interaction. For example, the notification manager is configured to provide a notification of download completion, a message reminder, and the like. The notification manager may alternatively be a notification that appears in the status bar at the top of the system in a form of a graph or scroll bar text, for example, a notification of an application running in the background, or a notification that appears on the screen in a form of a dialog window. For example, text information is prompted in the status bar, an alert tone is made, the terminal device vibrates, or an indicator light blinks.

The Android runtime includes a kernel library and a virtual machine. The Android runtime is responsible for scheduling and management of the Android system.

The kernel library includes two parts: One part is a functional function that needs to be called in a java language, and the other part is a kernel library of Android.

The application layer and the application framework layer run on the virtual machine. The virtual machine executes java files at the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (media libraries), a three-dimensional graphics processing library (for example, OpenGL ES), and a 2D graphics engine (for example, SGL).

The surface manager is configured to: manage a display subsystem, and provide fusion of 2D and 3D layers for a plurality of applications.

The media library supports playing and recording in a plurality of common audio and video formats, a static image file, and the like. The media library may support a plurality of audio and video encoding formats, for example, MPEG4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

To clearly describe the technical solutions and application scenarios of this application, nouns, English abbreviations, and the like in this application and the technical field are first explained.

PMU: This is a power management unit (power management unit), is also referred to as a power manager, and is configured to supply power to a Modem, an RFIC, and an MMBPA.

Modem: This is a modem. The Modem may appear in a form of a single chip; or may be disposed inside a baseband chip and integrated together with the baseband chip.

RFIC: This is a radio frequency chip (radio frequency integrated circuit), and is also referred to as a radio frequency integrated circuit, or is referred to as a radio transceiver (Transceiver). The RFIC is connected to a Modem to implement conversion between a Modem digital signal and a radio frequency signal.

SPST: This is a single-pole single-throw switch, and is configured to implement on/off control of a single path. A switch with another quantity of ports may be denoted as XPXT. Herein, X represents a natural number, and two Xs in XPXT may be the same or different. When X represents 1, S (abbreviation for single) may be used for representation. When X represents 2, replacement with D (abbreviation for double) may be used. For example, a double-pole four-throw switch may be denoted as DP4T.

MMBPA: This is a multi-mode band power amplifier (multi-mode band power amplifier) in a cellular mobile communication system, and is configured to amplify a cellular mobile communication signal.

Combiner: The combiner usually has three ports: a high-frequency port, configured to: select a high-frequency signal and suppress a low-frequency signal; a low-frequency port, configured to: select a low-frequency signal and suppress a high-frequency signal; and a third port that is a common port and through which the high-frequency signal selected through the high-frequency port and the low-frequency signal selected through the low-frequency port can pass. In a frequency division duplex (frequency division duplex, FDD) communication system, the combiner is configured to: isolate a sent/received signal and suppress an out-of-band signal.

Filter: The filter is configured to: select a signal on a passband and suppress a signal outside the passband. For example, the filter may be configured to suppress an out-of-band signal in a time division duplex (time division duplex, TDD) communication system.

Coupler: This is a power distribution element, and is configured to obtain a plurality of signals through coupling from a path for power detection and other purposes.

Radio frequency front-end: This is also referred to as a radio frequency front-end module, and usually refers to a radio frequency transceiver circuit system including modules such as an MMBPA, a switch, a duplexer, a filter, and a coupler.

Antenna tuning switch: The switch has a plurality of switching ports, and may switch between different paths to be connected to different matching circuits, so as to tune antenna performance.

FDD Band: This is a communication frequency band for FDD. A specific frequency band varies with a region, for example, may include B5, B8, B1, and B3.

TDD Band: This is a communication frequency band for TDD. A specific frequency band varies with a region, for example, may include B34, B38, B39, B40, and B41.

LMHB: L represents a low band (low band, LB), M represents a middle band (middle band, MB), and H represents a high band (high band, HB). The low band, the middle band, and the high band are collectively denoted as LMHB, and are used to indicate a low band, a middle band, and a high band in cellular mobile communication, for example, include all frequency bands of 700 MHz-2690 MHz.

GPS L1: With a carrier frequency of 1575.42 MHz, this is one of most common frequency bands of a global navigation satellite system.

GPS L5: A carrier frequency is 1176.45 MHz. A signal on the L5 frequency band has relatively high bandwidth and a relatively low multipath effect, and can provide more accurate positioning information.

BT/Wifi frequency range: The range is 2400-2483.5 MHz, and is used for short-range wireless communication.

UE: This is user equipment (user equipment), and refers to a collective term for wearable devices including a mobile phone, a smart terminal, a smartwatch, a smart band, and the like.

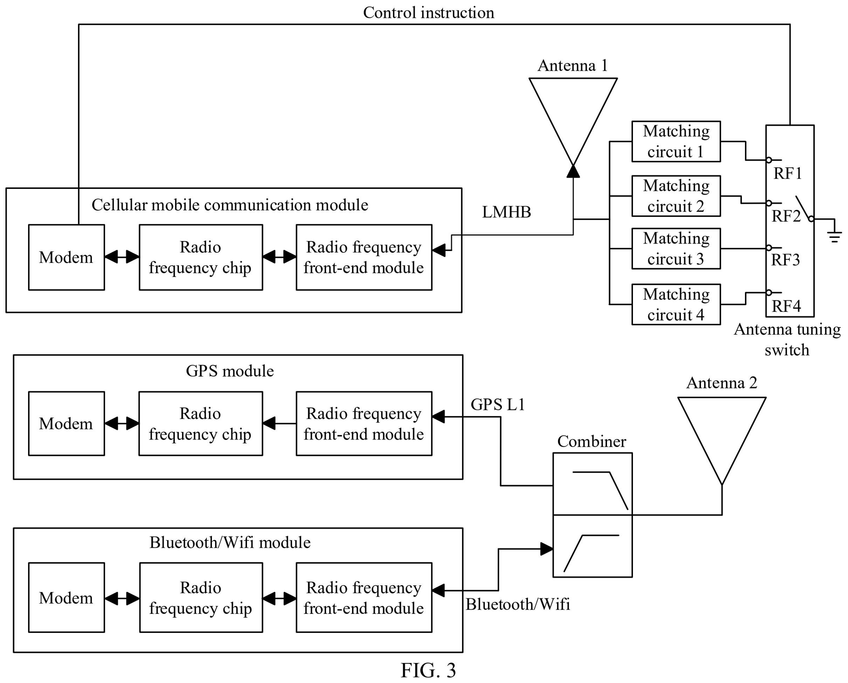

To meet an increasing use requirement of people, forms of electronic devices are increasingly rich. Wearable devices, as electronic devices for daily wear, play an irreplaceable role in people's lives. Usually, the wearable device needs to have a miniaturized appearance to be suitable for daily wear, and the wearable device further needs to support a plurality of communication standards to meet a plurality of communication requirements of people. A smartwatch is used as an example. Two antennas are usually disposed in a common smartwatch. One antenna is used for cellular mobile communication, and the other antenna is used for Bluetooth communication and Wifi communication. In some scenarios, if the smartwatch further needs to support a GPS positioning function, GPS communication may share a same antenna with Bluetooth communication. In this case, for a common antenna solution, refer to FIG. 3.

In FIG. 3, a cellular mobile communication system uses an antenna 1 to send/receive a cellular mobile communication signal; and a Bluetooth/Wifi communication system uses an antenna 2 to send/receive a Bluetooth/Wifi signal. If GPS and Bluetooth/Wifi share the antenna 2, a GPS signal and the Bluetooth/Wifi signal may be separated through a combiner. That is, a common port of the combiner may be connected to the antenna 2, a low-frequency port of the combiner is connected to a path of a low-frequency GPS L1 frequency band, and a high-frequency port of the combiner is connected to a path of a high-frequency Bluetooth/Wifi frequency band. It should be noted that Bluetooth and Wifi Modems are usually integrated into a same chip, and share a same antenna, to implement two communication modes. In embodiments of this application, Bluetooth/Wifi represents a communication system or a signal path compatible with Bluetooth communication and Wifi communication.

A cellular mobile communication module includes a modem (Modem), a radio frequency chip (RFIC), and a radio frequency front-end module for cellular mobile communication. The cellular mobile communication module is configured to process a frequency band for cellular mobile communication, including signals on an LB frequency band, an MB frequency band, and an HB frequency band. A GPS module includes a modem (Modem), a radio frequency chip (RFIC), and a radio frequency front-end module for GPS communication. The GPS module is configured to process a signal on a GPS frequency band. In FIG. 3, an example in which an L1 frequency band is used for GPS is shown. A Bluetooth/Wifi module includes a modem (Modem), a radio frequency chip (RFIC), and a radio frequency front-end module for Bluetooth/Wifi communication. The Bluetooth/Wifi module is configured to process a signal on a Bluetooth/Wifi frequency band.

Because there are a large quantity of frequency bands for cellular mobile communication and a wide frequency distribution range, a plurality of different matching circuits are usually disposed in the antenna 1 to adapt to different frequency bands, so that performance of the antenna 1 can be tuned to a required tuning state by using a corresponding matching circuit on each frequency band. In FIG. 3, an example in which an antenna tuning switch is a single-pole four-throw SP4T switch is shown. The antenna tuning switch has four paths: RF1, RF2, RF3, and RF4. The four paths may be used to respectively select a matching circuit 1, a matching circuit 2, a matching circuit 3, and a matching circuit 4 to tune a tuning state of the antenna 1. For example, the matching circuit 1 is a circuit obtained through debugging for a frequency band 1. That is, when the antenna 1 works on the frequency band 1, compared with another matching circuit, the matching circuit 1 can enable antenna efficiency of the antenna 1 to be highest. The matching circuit 2 is a circuit obtained through debugging for a frequency band 2. That is, when the antenna 1 works on the frequency band 2, compared with another matching circuit, the matching circuit 2 can enable the antenna efficiency of the antenna 1 to be highest. The matching circuit 3 is a circuit obtained through debugging for a frequency band 3. That is, when the antenna 1 works on the frequency band 3, compared with another matching circuit, the matching circuit 3 can enable the antenna efficiency of the antenna 1 to be highest. The matching circuit 4 is a circuit obtained through debugging for a frequency band 4. That is, when the antenna 1 works on the frequency band 4, compared with another matching circuit, the matching circuit 4 can enable the antenna efficiency of the antenna 1 to be highest.

In the circuit shown in FIG. 3, when the RF1 path is selected by the antenna tuning switch, the RF2, RF3, and RF4 paths are disconnected, so that the matching circuit 1 takes effect. Under a tuning effect of the matching circuit 1, the performance of the antenna 1 is fully exerted to ensure communication quality of the frequency band 1. When the RF2 path is selected by the antenna tuning switch, the RF1, RF3, and RF4 paths are disconnected, so that the matching circuit 2 takes effect. Under a tuning effect of the matching circuit 2, the performance of the antenna 1 is fully exerted to ensure communication quality of the frequency band 2. When the RF3 path is selected by the antenna tuning switch, the RF1, RF2, and RF4 paths are disconnected, so that the matching circuit 3 takes effect. Under a tuning effect of the matching circuit 3, the performance of the antenna 1 is fully exerted to ensure communication quality of the frequency band 3. When the RF4 path is selected by the antenna tuning switch, the RF1, RF2, and RF3 paths are disconnected, so that the matching circuit 4 takes effect. Under a tuning effect of the matching circuit 4, the performance of the antenna 1 is fully exerted to ensure communication quality of the frequency band 4. That the performance of the antenna 1 is fully exerted means a state, for example, highest antenna efficiency or a highest antenna gain, that can enable optimal antenna performance. The antenna tuning switch may switch, under an indication of a control instruction output by the Modem, switch logic to select a corresponding path, so that a matching circuit on the corresponding path takes effect, to tune an antenna state.

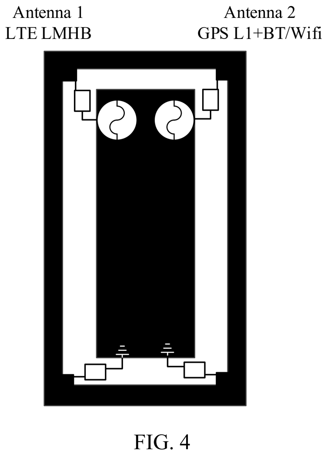

However, due to a small volume of the smartwatch, the two antennas are deployed in narrow space of the smartwatch and there is mutual coupling, resulting in poor performance of the antennas and affecting communication quality. For a schematic diagram of locations of two antennas deployed in a smartwatch, refer to FIG. 4. Due to limited space, an antenna 1 and an antenna 2 are disposed at a relatively short distance. In this case, the two antennas share a partial antenna structure. For example, the two antennas share a ground and a partial antenna radiator (for example, a partial metal frame), and a matching circuit of the antenna 1 affects antenna performance of the antenna 2. Consequently, in some cases, the antenna performance cannot be fully exerted, affecting communication quality.

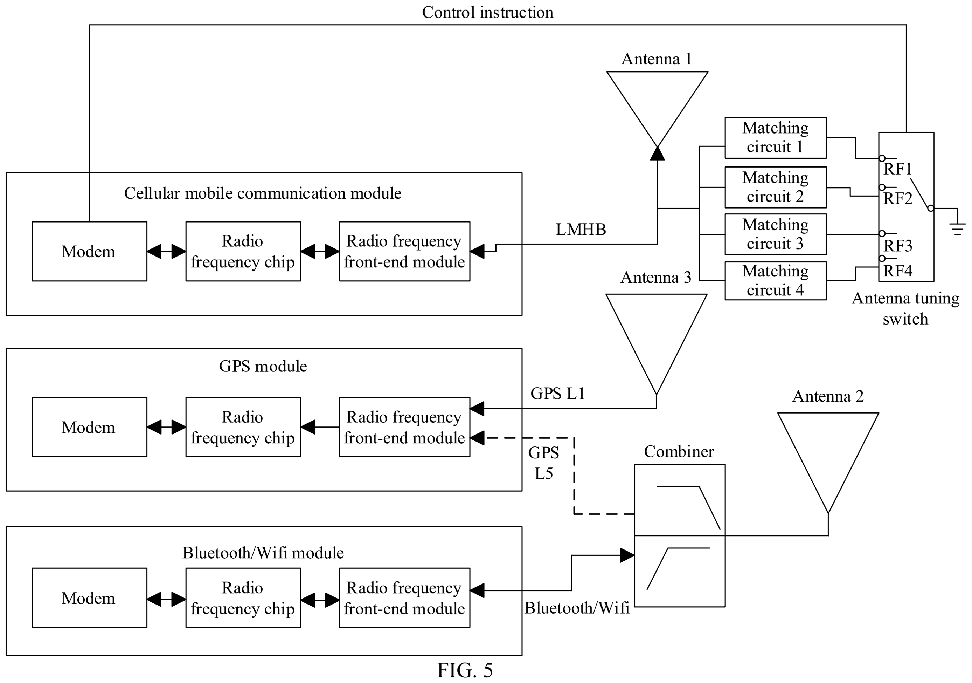

There is a similar problem for another antenna combination solution. For example, in a circuit shown in FIG. 5, a GPS L5 frequency band and a Bluetooth/Wifi frequency band share an antenna 2, while a GPS L1 frequency band separately uses an antenna 3. If the GPS L5 frequency band is not required, a Bluetooth signal may not pass through a combiner and is directly connected to the antenna 2. In FIG. 5, a coupling degree between the three antennas is higher, resulting in severer degradation of antenna performance.

Based on this, this application provides an antenna state control method. When a Modem of a cellular mobile communication system does not work, an antenna tuning switch may be switched to a switch logic state that can enable good antenna performance of a GPS+Bluetooth/Wifi antenna. In this case, the GPS+Bluetooth/Wifi antenna may work in a tuning state with good antenna performance, to ensure communication quality of GPS+Bluetooth/Wifi when the cellular mobile communication system does not work.

For ease of understanding, in the following embodiments of this application, the antenna state control method provided in the embodiments of this application is described in detail by using the structures shown in FIG. 1 to FIG. 5 as examples and with reference to the accompanying drawings and application scenarios. An execution body of the embodiments of this application may be a processor, a chip (for example, a Modem), or an electronic device. In the following, an example in which the execution body is the Modem of the cellular mobile communication system is used for description.

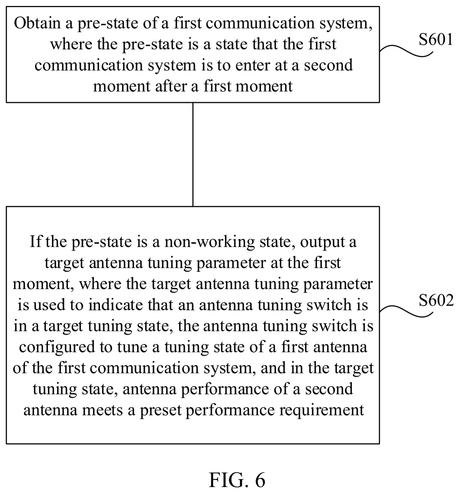

FIG. 6 is a schematic flowchart of an antenna state control method according to an embodiment of this application. The method includes the following steps.

S601: Obtain a pre-state of a first communication system, where the pre-state is a state that the first communication system is to enter at a second moment after a first moment.

The first communication system may be a cellular mobile communication system or another communication system with an antenna tuning switch. In the following, an example in which the first communication system is a cellular mobile communication system is used for description. A standard of the cellular mobile communication system may be GSM, CDMA, LTE, new radio (new radio, NR), or the like. The standard of the cellular mobile communication system is not limited in this embodiment of this application.

The pre-state of the first communication system is a state that the first communication system is about to enter. For example, if the first communication system is in a working state at the first moment and is to enter a non-working state at the second moment, the pre-state is the non-working state; or if the first communication system is in a working state at the first moment and is still in the working state at the second moment, the pre-state is the working state.

Optionally, an excessively large time difference between the first moment and the second moment may lead to a relatively long interval to the pre-state at the second moment and inaccuracy of indicating, by the pre-state, to output a target antenna tuning parameter at the first moment. Therefore, a time difference between the first moment and the second moment is less than or equal to a preset time difference threshold, to ensure that the target antenna tuning parameter effectively acts on a second antenna when the first communication system does not work, and to ensure antenna performance of the second antenna.

It should be noted that when the first communication system is in the working state, it indicates that a Modem of the first communication system is in the working state; and when the first communication system is in the non-working state, it indicates that the Modem of the first communication system is in the non-working state. The Modem in the non-working state may be in a sleep state, or may be in an off state (or referred to as a power-off state). All other Modems in the following of this application are the Modem of the first communication system, unless otherwise specified. The Modem can obtain a pre-state that is to be entered at a next moment after a current moment of the first communication system.

S602: If the pre-state is the non-working state, output the target antenna tuning parameter at the first moment, where the target antenna tuning parameter is used to indicate that an antenna tuning switch is in a target tuning state, the antenna tuning switch is configured to tune a tuning state of a first antenna of the first communication system, and in the target tuning state, the antenna performance of the second antenna meets a preset performance requirement.

For the second antenna of a second communication system, when the antenna tuning switch of the first communication system switches switch logic under control of different antenna tuning parameters, different matching circuits are selected to achieve an effect of tuning the antenna performance on a current cellular mobile communication frequency band. These different matching circuits impose different impact on the antenna performance of the second antenna. This is reflected in the working state, that is, different frequency bands on which the first communication system works impose different impact on antenna efficiency of the second antenna.

Based on the circuit shown in FIG. 3, the antenna performance may be described by using antenna efficiency. Higher antenna efficiency indicates better antenna performance, and lower antenna efficiency indicates worse antenna performance. In the following, impact of matching circuits corresponding to different frequency bands of the cellular mobile communication system on antenna efficiency of GPS+Bluetooth/Wifi is described by using an example in which the first communication system is a cellular mobile communication system and the second communication system is a GPS+Bluetooth/Wifi communication system and with reference to data in Table 1.

**Table 1**

| State | Frequency band for cellular mobile communication | Antenna 1 | Antenna 2 | |
|---|---|---|---|---|
| | | State of the SP4T switch | GPS L1 | Bluetooth |
| State 1 (1000) | B1 | RF1 turned on | G-1 | A-0.6 |
| State 2 (0100) | B3 | RF2 turned on | G-0.8 | A-0.5 |
| State 3 (0010) | B28 | RF3 turned on | G | A-0.3 |
| State 4 (0001) | B40 | RF4 turned on | G+0.3 | A+0.1 |

In Table 1, G is antenna efficiency on the GPS L1 frequency band in a state in which there is no impact of the antenna 1, and A is antenna efficiency on the Bluetooth/Wifi frequency band in a state in which there is no impact of the antenna 1. The state 1 is a state in which the cellular mobile communication system works on a B1 (Band1) frequency band. In this case, the antenna tuning parameter is 1000. Under an indication of 1000, the RF1 path of the SP4T switch is turned on (ON) and other paths are turned off (OFF). In the state 1, the matching circuit 1 acts on a tuning state of the antenna 1, and acts on a tuning state of the antenna 2. Under action of the matching circuit 1, antenna efficiency of the antenna 2 corresponding to the GPS L1 frequency band is decreased by 1 dB compared with G, and antenna efficiency of the antenna 2 corresponding to the Bluetooth frequency band is decreased by 0.6 dB compared with A. Table 1 further shows path states of the antenna tuning switch and impact on the antenna efficiency of the antenna 2 when the cellular mobile communication system represented by the state 2, the state 3, and the state 4 works on different frequency bands. Details are not described herein again. It may be learned from Table 1 that in the state 4, namely, a state corresponding to a logic state of the antenna tuning switch during working on the B40 band, the antenna tuning parameter is 0001. Under an indication of 0001, antenna efficiency on the GPS L1 frequency band and Bluetooth is a highest value compared with that in a plurality of other states. Therefore, the target antenna tuning parameter may be determined as a parameter corresponding to a case in which cellular mobile communication works on the B40 frequency band, namely, a parameter that controls the RF4 path to be turned on and the other paths to be turned off, and is specifically 0001.

When the first communication system is about to enter the non-working state, the Modem may determine that the first communication system subsequently does not need to work, and an operating frequency band for cellular mobile communication does not need to be considered, but outputs an antenna tuning parameter that enables the antenna efficiency of the antenna 2 to be highest to control the logic state of the antenna tuning switch. The antenna tuning parameter is denoted as the target antenna tuning parameter. When receiving the target antenna tuning parameter sent by the Modem, the antenna tuning switch may switch a path based on a logic state indicated by the target antenna tuning parameter, to tune a tuning state of the second antenna to a state in which the antenna efficiency is highest, and ensure communication quality of GPS L1 and/or Bluetooth. The target antenna tuning parameter is determined based on a requirement for the highest antenna efficiency, to ensure that the communication quality of GPS L1 and/or Bluetooth is maximized.

It may be understood that the second communication system may be a GPS communication system, a Bluetooth/Wifi communication system, or a communication system including GPS and Bluetooth/Wifi.

When the second communication system is a GPS communication system and supports the L1 frequency band, any state that meets the antenna efficiency requirement may be selected based on antenna efficiency in the GPS L1 column in Table 1, and then an antenna tuning parameter corresponding to the state is used as the target antenna tuning parameter. Alternatively, a state in which the antenna efficiency is highest may be selected based on antenna efficiency in the GPS L1 column in Table 1, and an antenna tuning parameter corresponding to the state is used as the target antenna tuning parameter.

When the second communication system is a Bluetooth/Wifi communication system, any state that meets the antenna efficiency requirement may be selected based on antenna efficiency in the Bluetooth column in Table 1, and then an antenna tuning parameter corresponding to the state is used as the target antenna tuning parameter. For example, an antenna tuning parameter corresponding to the state 3 or the state 4 is used as the target antenna tuning parameter. Alternatively, a state in which the antenna efficiency is highest may be selected based on antenna efficiency in the Bluetooth column in Table 1, and an antenna tuning parameter corresponding to the state is used as the target antenna tuning parameter. It should be noted that usually, communication frequency bands for Bluetooth and Wifi are close to each other, and antenna efficiency is close to each other. Antenna efficiency during Wifi communication may be represented by using antenna efficiency during Bluetooth communication.

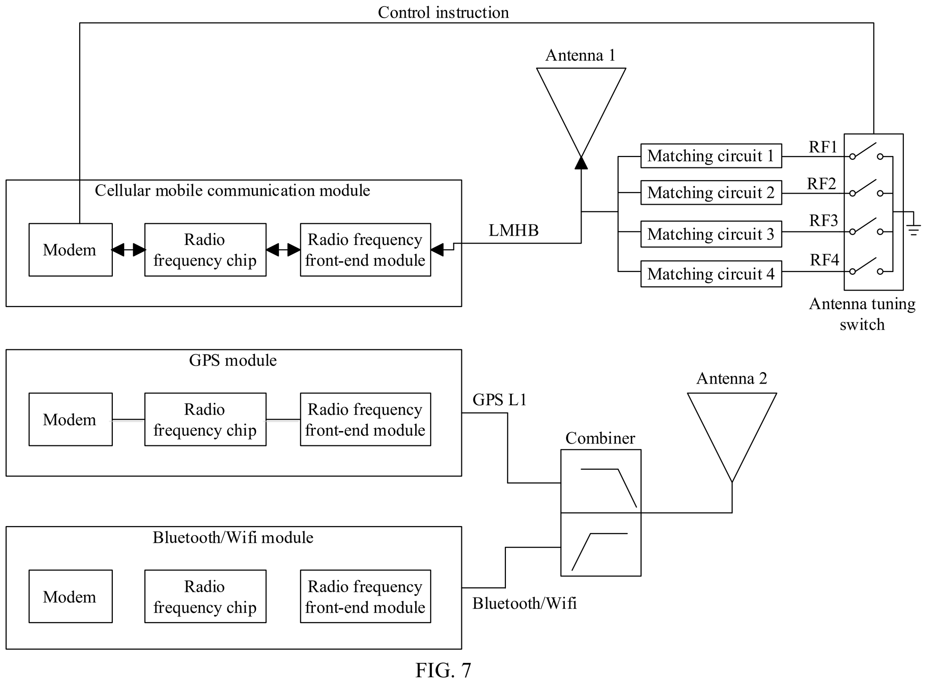

A correspondence between the state of the SP4T switch and the antenna efficiency shown in Table 1 is an example. In another embodiment, an expression form of the antenna tuning parameter varies with a port or a form of the antenna tuning switch. Based on the circuit shown in FIG. 3, the antenna tuning switch is replaced with a switching element including four SPST switches. For details, refer to FIG. 7. The antenna tuning switch in FIG. 7 can no longer select only one matching circuit, and may select a plurality of matching circuits for combination, to form more forms of matching circuits, so as to implement more tuning states of the antenna.

In a circuit shown in FIG. 7, the antenna performance is described by using antenna efficiency. In the following, impact of different frequency bands of the cellular mobile communication system on antenna efficiency of GPS+Bluetooth/Wifi is described by using an example in which the first communication system is a cellular mobile communication system and the second communication system is a GPS+Bluetooth/Wifi communication system and with reference to data in Table 2.

It may be learned from Table 2 that when the cellular mobile communication system works in the state 7, antenna efficiency of a GPS antenna is highest on the L1 frequency band, and antenna efficiency of a Bluetooth antenna is decreased by 0.2 dB compared with that in a case in which there is no impact of the antenna 1. If current antenna performance during GPS communication is relatively poor, that is, G is relatively small, antenna efficiency during GPS communication may be preferentially considered. Therefore, a state in which the antenna efficiency is highest during GPS communication may be selected. For example, an antenna tuning parameter 0011 corresponding to the state 7 is used as the target antenna tuning parameter. If current performance of the Bluetooth antenna of an electronic device is relatively poor, that is, A is relatively small, antenna efficiency during Bluetooth communication may be preferentially considered. Therefore, a state in which the antenna efficiency is highest during Bluetooth communication may be selected. In the case shown in Table 2, a balance may alternatively be struck in considering antenna efficiency in Bluetooth and GPS communication states, and an antenna tuning parameter 0011 corresponding to the state 7 is selected as the target antenna tuning parameter.

**Table 2**

| State | Frequency band | Antenna 1 | Antenna 2 | |
|---|---|---|---|---|
| | | States of the four SPST switches | GPS L1 | Bluetooth |
| State 1 (1111) | B28 | All turned on | G-1.5 | A-0.4 |
| State 2 (1000) | B5/B41 | RF1 turned on | G-0.8 | A |
| State 3 (0100) | B8 | RF2 turned on | G | A-0.2 |
| State 4 (1110) | B3 | RF1+RF2+RF3 turned on | G-0.8 | A-1.7 |
| State 5 (1100) | B1 | RF1+RF2 turned on | G | A-0.3 |
| State 6 (1001) | B40 | RF1+RF4 turned on | G-0.3 | A-0.5 |
| State 7 (0011) | / | RF3+RF4 turned on | G+0.3 | A-0.2 |

Optionally, the target antenna tuning parameter may alternatively be determined with reference to a current state of the electronic device. For example, in a music playing scenario, if the electronic device is in a Bluetooth connected state, the antenna efficiency during Bluetooth communication may be preferentially considered, and an antenna tuning parameter 1000 corresponding to the state 2 is selected as the target antenna tuning parameter. If the electronic device is in a sports mode, there may be no need to consider Bluetooth communication, but the antenna efficiency during GPS communication is preferentially considered, and a state in which the antenna efficiency is highest during GPS communication is selected, for example, an antenna tuning parameter 0011 corresponding to the state 7 is used as the target antenna tuning parameter.

In addition to the antenna efficiency, the antenna performance of the antenna may be described by using another parameter such as an antenna gain. Correspondingly, the preset performance requirement may be that the antenna efficiency reaches a preset efficiency threshold, the antenna gain reaches a preset gain threshold, or the like; or may be a requirement that the antenna efficiency is a highest value in a plurality of states, the antenna gain is a highest value in a plurality of states, or the like. This is not limited in this embodiment of this application.

In the embodiment shown in FIG. 6, the Modem can first output the target tuning parameter when being about not to work, to enable the antenna tuning switch to be in the target tuning state, and then enters the non-working state. In the target tuning state, it is ensured that the antenna performance of the second antenna of the second communication system can meet the preset performance requirement, to ensure that the antenna performance of the second antenna can be fully exerted, so as to ensure communication quality of the second communication system.

In the following, the pre-state described above is described in detail by using an example in which the first communication system is a cellular mobile communication system and the second communication system is a GPS+Bluetooth/Wifi communication system.

### State A:

Usually, after the electronic device (UE) is powered on, the Modem is usually in an idle (Idle) state or an RRC state.

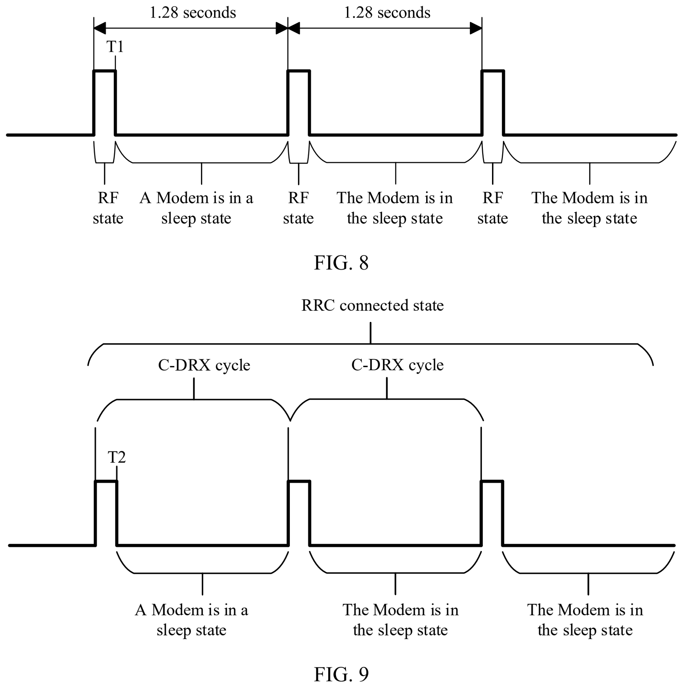

When the electronic device is in a screen-off standby situation, the electronic device usually enters the Idle state. In this case, because the cellular mobile communication system temporarily does not have a service, the Modem may be intermittently in the sleep state to reduce power consumption. In this case, for a working time slot of the Modem, refer to FIG. 8. In FIG. 8, an example in which the electronic device is in an Idle state in LTE communication is used, and 1.28 seconds is configured as one cycle. In each cycle, the Modem works only for a short time period (a time period in an RF state), and the Modem is in the sleep state in other time. This state may be referred to as an iDRX state. When a next cycle arrives, the Modem restarts to enter the working state, and then enters the sleep state. This is periodically repeated. A 1.28-second cycle is used as an example. At a moment at which the Modem is about to enter the sleep state, namely, a moment (T1) before a falling edge of a cycle in FIG. 8, denoted as the first moment, the Modem may output the target antenna tuning parameter to control the antenna tuning switch to be tuned to a state that enables good antenna performance of the second antenna. Then, at the second moment, the Modem enters the sleep state. In the sleep state, the Modem does not need to work. Therefore, the output target antenna tuning parameter does not need to adapt to a currently registered frequency band for cellular mobile communication, and it only needs to be ensured that in a process in which the Modem is in the sleep state, antenna performance of GPS+Bluetooth/Wifi is fully exerted, to ensure communication quality of the GPS+Bluetooth/Wifi communication system when the Modem is in the sleep state. In this case, a time difference threshold between the first moment and the second moment may be 0.1 second, 0.2 second, or the like.

When the electronic device is in the radio resource control (radio resource control, RRC) state, and there is no data transmission in the cellular mobile communication system, the electronic device is in a connected-mode discontinuous reception (connectedmode DRX, C-DRX) state. In this state, for a working time slot of the Modem, refer to FIG. 9. In each C-DRX cycle, the Modem works only for a time period, and the Modem is in the sleep state in other time. When a next C-DRX cycle arrives, the Modem restarts to enter the working state, and then enters the sleep state. This is periodically repeated. At a moment at which the Modem is about to enter the sleep state, namely, a moment (T2) before a falling edge of a cycle in FIG. 9, denoted as the first moment, the Modem may output the target antenna tuning parameter to control the antenna tuning switch to be tuned to a state that enables good antenna performance of the second antenna. Then, at the second moment, the Modem enters the sleep state. In the sleep state, the Modem does not need to work. Therefore, the output target antenna tuning parameter does not need to adapt to a currently registered frequency band for cellular mobile communication, and it only needs to be ensured that in a process in which the Modem is in the sleep state, antenna performance of GPS+Bluetooth/Wifi is fully exerted, to ensure communication quality of the GPS+Bluetooth/Wifi communication system when the Modem is in the sleep state.

To implement a function of the Modem to output the target antenna tuning parameter, a functional function, referred to as a close function, may be added to software of the Modem. The function may be named Tuner_switch_off. The close function is filled with the target antenna tuning parameter. When the Modem is about to enter the sleep state, the target antenna tuning parameter may be output to the antenna tuning switch by calling the Tuner_switch_off function, to tune the antenna performance of the second antenna, so as to ensure communication quality of the GPS+Bluetooth/Wifi communication system when the Modem is in the sleep state.

### State B:

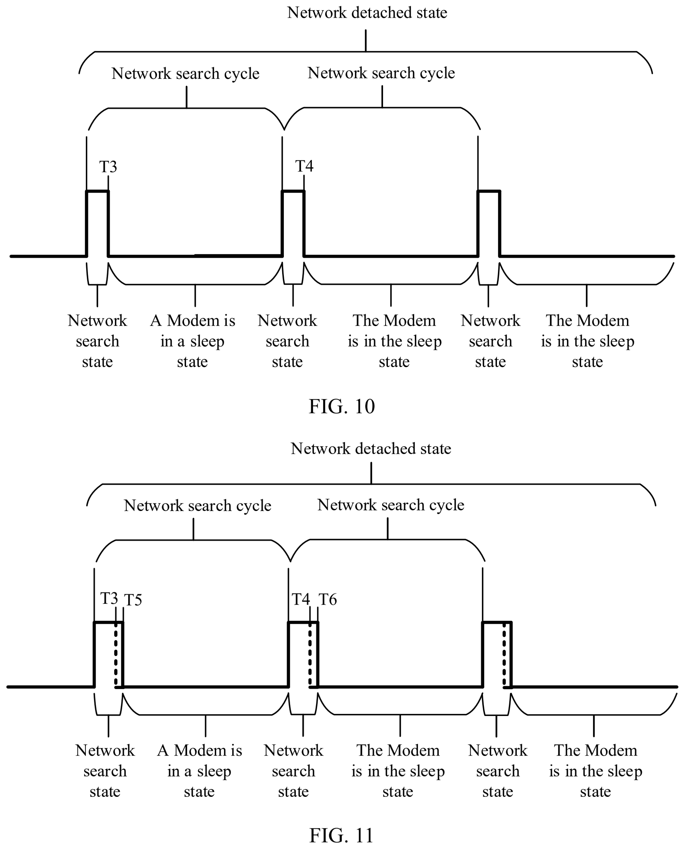

Usually, after the cellular mobile communication system of the electronic device is detached from a network (no service or out of service), no signal is displayed. In this case, the Modem performs network search based on a preset network search sequence, to implement a network connection. A common network search sequence is to first search for an LTE network, then search for a WCDMA network, and finally search for a GSM network. If no network can be found based on the preset network search sequence, to avoid excessive power consumption caused by continuous network search, the Moedm uses a periodic network search strategy. For a working time slot of the Modem in a network search process, refer to FIG. 10. In a first network search cycle, at a moment at which the Modem completes the preset network search sequence, namely, a moment T3 in FIG. 10, if no available network is found, the modem enters the sleep state. When a second network search cycle arrives, network search continues to be repeated based on the preset network search sequence. If the available network still cannot be found at a moment at which a network search state in the second network search cycle is completed, namely, a moment T4, the modem enters the sleep state again. Network search is periodically performed until the available network is found.

Based on this, in this embodiment of this application, after common network search is completed, search for a network on a frequency band may be added. It should be noted that the newly added frequency band for search is a frequency band corresponding to the target antenna tuning parameter. If the available network still cannot be found after the search for the newly added frequency band is completed, the Modem enters the sleep state. After the frequency band for search is newly added, for a working time slot of the Modem, refer to FIG. 11. In a network search cycle, the Modem can originally enter the sleep state at the moment T3. However, in this embodiment, an operation of searching for a newly added frequency band further needs to be performed in a time period of T3-T5, and then the modem enters the sleep state at the moment T5. In the second network search cycle, a moment at which the Modem enters the sleep state is delayed from original T4 to T6, and an operation of searching for a newly added frequency band is performed in a time period of T4-T6. In this case, the antenna tuning switch may be maintained in a configuration corresponding to a frequency band for last network search, that is, maintained in a state indicated by the target tuning parameter, and does not change randomly. Table 1 is used as an example. The B40 frequency band may be added for search to a frequency band for network search, so that the antenna tuning switch is maintained in a state corresponding to 0001 when the Modem is in the sleep state. In a phase in which the Modem enters the sleep state after completing the search for the newly added frequency band, antenna performance of GPS+Bluetooth/Wifi can be fully exerted, to ensure communication quality of the GPS+Bluetooth/Wifi communication system.

### State C:

When the electronic device enters an airplane mode under an operation of a user, the electronic device does not need to perform cellular mobile communication. In this case, the Modem is in the non-working state. Before the Modem enters the non-working state, the target antenna tuning parameter may be output first to control the antenna tuning switch to remain in the target tuning state, to ensure that antenna performance of GPS+Bluetooth/Wifi can be fully exerted in the airplane mode, so as to ensure communication quality of the GPS+Bluetooth/Wifi communication system. Then, the Modem enters the non-working state.

### State D:

When the electronic device is in a Bluetooth communication state or a Wifi communication state, it may be considered that there is no need to make a call, and therefore there is no need for a cellular mobile communication network. The Modem may preferentially ensure communication quality of Bluetooth communication or Wifi communication. The Modem may output the target antenna tuning parameter to control the antenna tuning switch to remain in the target tuning state, to ensure that antenna performance of GPS+Bluetooth/Wifi can be fully exerted during Bluetooth communication or Wifi communication, so as to further ensure communication quality of the GPS+Bluetooth/Wifi communication system.

For a manner of outputting the target antenna tuning parameter in the state C and the state D, refer to the descriptions of calling a close function in the state A. Details are not described herein again.

### State E:

The electronic device sometimes enters a limited service state due to a status of a surrounding network or a setting of an operator. For example, when a user of the electronic device is in arrears, the electronic device cannot be connected to a network without a limitation, but is not completely detached from the network. In the limited service state, the electronic device still periodically performs network search, and the Modem periodically enters the sleep state. When a network that can provide a limited service is found, the electronic device selects an available network to camp on. In a network search process, the Modem preferentially chooses to search for a target frequency band corresponding to the target antenna tuning parameter. If a network on the target frequency band can be successfully registered, the electronic device can maintain camping on the network on the target frequency band. In this way, the antenna tuning switch can maintain a state indicated by the target antenna tuning parameter, and does not change randomly, to ensure communication quality of the GPS+Bluetooth/Wifi communication system.

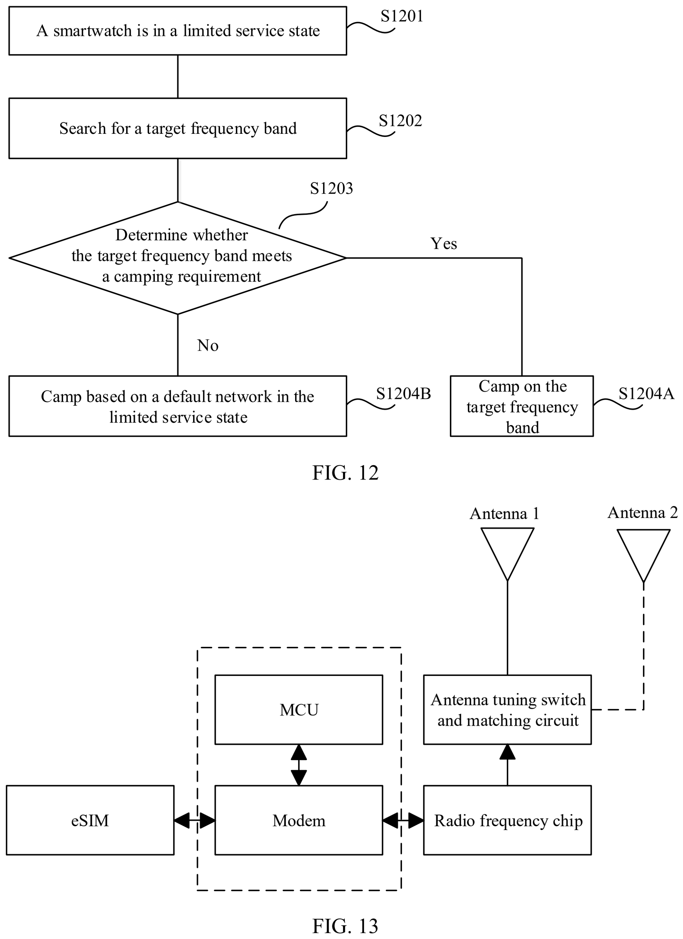

Table 1 is used as an example. The Modem outputs an antenna tuning parameter 0001 corresponding to the B40 frequency band to first attempt to register the B40 frequency band. If the registration succeeds and a camping requirement can be met, the modem maintains camping on the B40 frequency band. If the registration fails, the modem may continue to search for another available network to camp on. An example in which the electronic device is a smartwatch is used. For a specific network search procedure, refer to FIG. 12. The following content is included.

S1201: The smartwatch is in a limited service state.

S1202: Search for a target frequency band.

If the target frequency band is set in this case, the electronic device may preferentially search for the target frequency band when network search is started.

S1203: Determine whether the target frequency band meets a camping requirement. If yes, S1204A is performed. If no, S1204B is performed.

S1204A: Camp on the target frequency band.

S1204B: Camp based on a default network in the limited service state.

That is, when the electronic device is in the limited service state, if the electronic device finds the target frequency band and the target frequency band meets the camping requirement, the electronic device camps on the target frequency band. In this case, in a working state on the target frequency band, the antenna tuning switch can enable antenna performance of the first antenna to meet a communication requirement on the target frequency band, and can further enable antenna performance of GPS+Bluetooth/Wifi to be fully exerted, to ensure communication quality of the GPS+Bluetooth/Wifi communication system.

If the target frequency band is not found or the target frequency band does not meet the camping requirement, for example, if no network is available during the search for the target frequency band, another frequency band continues to be searched for, that is, network search and camping are performed based on a default network search strategy in the limited service state.

Based on the foregoing embodiment, the electronic device may further first determine whether a subscriber identity module card (Subscriber Identity Module, SIM, eSIM card) is present. If the SIM is not inserted into the electronic device or the eSIM card is not set, it indicates that the electronic device does not have a condition for accessing the cellular mobile communication system, and there is no need to consider selection of a matching circuit on a specific path by an antenna tuning circuit to tune the first antenna. Therefore, the Modem may directly output the target antenna tuning parameter, for example, output the target antenna tuning parameter by calling a close function. The antenna tuning switch may be configured based on the target antenna tuning parameter, to ensure that the antenna performance of the second antenna is fully exerted. In this way, there is no need to determine a pre-state of the Modem, and a subsequent invalid procedure is avoided. If the subscriber identity module card is present, the method in the foregoing embodiment may continue to be performed.

Specifically, the Modem may report a message indicating that the subscriber identity module card is not present to an MCU. After receiving the message indicating that the subscriber identity module card is not present, the MCU returns a power-off instruction to the Modem and a PMU, to indicate the Modem to power off. Under an indication of the power-off instruction, the Modem outputs the target antenna tuning parameter by calling a close function, and then powers off to enter the off state. For details, refer to FIG. 13. When the Modem and the MCU determine that the eSIM is not present, the Modem outputs a message indicating that the eSIM is not present to the MCU. The MCU may return the power-off instruction to the Modem. In this case, the Modem may first output the target antenna tuning parameter to the antenna tuning switch, and then power off to enter the off state. When receiving the power-off instruction, the Modem may alternatively output the target antenna tuning parameter to the antenna tuning switch through a radio frequency chip (RFIC), and then power off to enter the off state. In FIG. 13, an example in which the Modem sends the target antenna tuning parameter to the antenna tuning switch through the RFIC is shown. Under action of the target antenna tuning parameter, the antenna 1 enables the antenna 2 to fully exert the antenna performance. As shown in FIG. 13, the MUC and the Modem may be integrated into one chip. In FIG. 13, the Modem may output the target antenna tuning parameter by calling a close function, when searching for the target frequency band, or when camping on the target frequency band. For a manner of triggering the Modem to output the target antenna tuning parameter, refer to related descriptions in another embodiment of the entire specification. Details are not described herein again. In addition, the Modem may output the target antenna tuning parameter in a form of a MIPI signal or in a form of a GPIO, provided that the antenna tuning switch can be indicated to be configured based on the target tuning state.

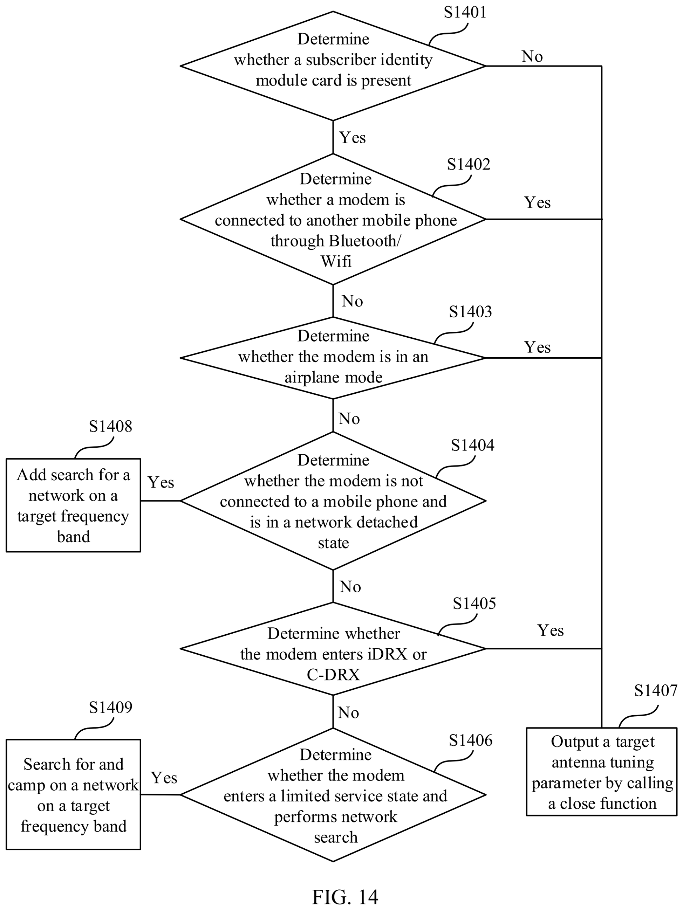

To describe the technical solutions in this application more completely, the technical solutions in the embodiments of this application are described herein by using a complete embodiment, as shown in FIG. 14. The following content is included.

S1401: Determine whether a subscriber identity module card is present. If yes, S1402 is performed. If no, S1407 is performed.

S1402: Determine whether a modem is connected to another mobile phone through Bluetooth/Wifi. If no, S1403 is performed. If yes, S1407 is performed.

S1403: Determine whether the modem is in an airplane mode. If no, S1404 is performed. If yes, S1407 is performed.

S1404: Determine whether the modem is not connected to a mobile phone and is in a network detached state. If no, S1405 is performed. If yes, S1408 is performed.

S1405: Determine whether the modem enters iDRX or C-DRX. If no, S1406 is performed. If yes, S1407 is performed.

S1406: Determine whether the modem enters a limited service state and performs network search. If no, the procedure is stopped. If yes, S1409 is performed.

S1407: Output a target antenna tuning parameter by calling a close function.

S1408: Add search for a network on a target frequency band.

After completing the search for the target frequency band, the Modem may enter a sleep state.

S1409: Search for and camp on a network on a target frequency band.

After finding the network on the target frequency band, the Modem may camp on the network on the target frequency band. If the network on the target frequency band is not found, a network on a default frequency band may be searched for to camp on based on a setting in the limited service state.

It should be noted that in the procedure shown in FIG. 14, an execution sequence of steps S1402 to S1406 may be further mutually adjusted. Provided that a condition is met in steps S1402 to S1406, a jump may be made to perform a step (one of S1407, S1408, and S1409) that meets the condition. If the condition is not met, other determining steps may continue to be sequentially performed.

For an implementation principle and technical effects of the embodiment shown in FIG. 14, refer to the detailed descriptions in the foregoing embodiment. Details are not described herein again.

An example of the method provided in this application is described in detail above. It may be understood that to implement the foregoing functions, the corresponding apparatus includes corresponding hardware structures and/or software modules for performing the functions. A person skilled in the art should be easily aware that the units and the algorithm steps in the examples described with reference to the embodiments disclosed in this specification can be implemented in a form of hardware or a combination of hardware and computer software in this application. Whether a function is performed by hardware or hardware driven by computer software depends on particular applications and design constraints of the technical solutions. A person skilled in the art may use different methods to implement the described functions for each specific application, but it should not be considered that such an implementation goes beyond the scope of this application.

In this application, the antenna state control apparatus may be divided into functional modules based on the foregoing method examples. For example, each functional module may be obtained through division for each function, or two or more functions may be integrated into one module. The integrated module may be implemented in a form of hardware, or may be implemented in a form of a software functional module. It should be noted that division into the modules in this application is an example, and is merely logical function division. During actual implementation, there may be another division manner.

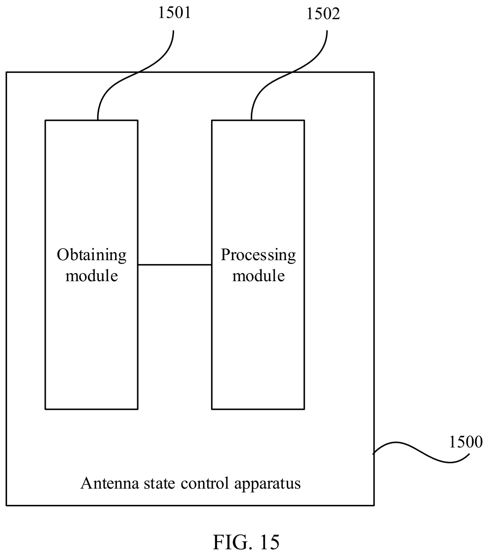

FIG. 15 is a schematic diagram of a structure of an antenna state control apparatus according to this application. The apparatus 1500 includes:
an obtaining module 1501, configured to obtain a pre-state of a first communication system, where the pre-state is a state that the first communication system is to enter at a second moment after a first moment; and
a processing module 1502, configured to: when the pre-state is a non-working state, output a target antenna tuning parameter at the first moment, where the target antenna tuning parameter is used to indicate that an antenna tuning switch is in a target tuning state, the antenna tuning switch is configured to tune a tuning state of a first antenna of the first communication system, and in the target tuning state, antenna performance of a second antenna meets a preset performance requirement.

In some embodiments, a time difference between the first moment and the second moment is less than a preset time difference threshold.

In some embodiments, the non-working state is a sleep state when the first communication system is in an idle state or a radio resource control RRC connected state.

In some embodiments, the non-working state is a sleep state in a network search cycle.

In some embodiments, the non-working state is a state in an airplane mode.

In some embodiments, the non-working state is that a second communication system corresponding to the second antenna is in a Bluetooth communication state.

In some embodiments, the processing module 1502 is specifically configured to output the target antenna tuning parameter to the antenna tuning switch by calling a close function at the first moment, where the close function is filled with the target antenna tuning parameter.

In some embodiments, the non-working state is a sleep state in a network search cycle, and the processing module 1502 is specifically configured to search for a target frequency band corresponding to the target tuning state at the first moment, to output the target antenna tuning parameter.

In some embodiments, if the pre-state is a working state, the processing module 1502 is specifically configured to: determine that an electronic device is in a limited service state, and output the target antenna tuning parameter, to register a target frequency band corresponding to the target tuning state; and if the registration succeeds, determine that the first communication system camps on the target frequency band.

In some embodiments, before the obtaining module 1501 obtains the pre-state of the first communication system, the processing module 1502 further determines whether a subscriber identity module card is present; and if yes, the step of obtaining a pre-state of a first communication system is performed; or if no, the target antenna tuning parameter is output.

In some embodiments, the processing module 1502 is specifically configured to: control a Modem to report a message indicating that the subscriber identity module card is not present to an MCU; and when the Modem receives a power-off instruction returned by the MCU based on the message indicating that the subscriber identity module card is not present, control, in response to the power-off instruction, the Modem to output the target antenna tuning parameter and then power off.

In some embodiments, in the target tuning state, antenna efficiency of the second antenna is higher than antenna efficiency in another tuning state, where the another tuning state is a tuning state of the antenna tuning switch, and the another tuning state is different from the target tuning state.

For a specific manner in which the apparatus 1500 perform the antenna state control method and achieved beneficial effects, refer to the related descriptions in the method embodiments. Details are not described herein again.

An embodiment of this application further provides a chip. The chip includes a processor, configured to perform the method in the foregoing embodiments. The chip may be a Modem chip, or may be a chip such as a baseband processor into which a Modem is integrated

An embodiment of this application further provides an electronic device, including the foregoing processor. The electronic device provided in this embodiment may be the terminal device 100 shown in FIG. 1, and is configured to perform the foregoing antenna state control method. When an integrated unit is used, the terminal device may include a processing module, a storage module, and a communication module. The processing module may be configured to control and manage an action of the terminal device, for example, may be configured to support the terminal device in performing steps performed by a display unit, a detection unit, and a processing unit. The storage module may be configured to support the terminal device in storing program code, data, and the like. The communication module may be configured to support communication between the terminal device and another device.

The processing module may be a processor or controller. The processor may implement or execute various example logical blocks, modules, and circuits described with reference to content disclosed in this application. The processor may alternatively be a combination that implements a computing function, for example, a combination of one or more microprocessors or a combination of a digital signal processor (digital signal processer, DSP) and a microprocessor. The storage module may be a memory. The communication module may be specifically a radio frequency circuit, a Bluetooth chip, a Wi-Fi chip, or another device that interacts with another terminal device.

In an embodiment, when the processing module is a processor and the storage module is a memory, the terminal device in this embodiment may be a device having the structure shown in FIG. 1.

In some embodiments, the electronic device may alternatively be a wearable device or a miniaturized electronic device with relatively small antenna layout space.

An embodiment of this application further provides a computer-readable storage medium. The computer-readable storage medium stores a computer program, and when the computer program is executed by a processor, the processor is enabled to perform the antenna state control method in any one of the foregoing embodiments.

An embodiment of this application further provides a computer program product. When the computer program product is run on a computer, the computer is enabled to perform the related steps to implement the antenna state control method in the foregoing embodiments.

The electronic device, the computer-readable storage medium, the computer program product, or the chip provided in the embodiments may be configured to perform the corresponding method provided above. Therefore, for beneficial effects that can be achieved by the electronic device, the computer-readable storage medium, the computer program product, or the chip, refer to the beneficial effects in the corresponding method provided above. Details are not described herein again.

In the several embodiments provided in this application, it should be understood that the disclosed apparatus and method may be implemented in another manner. For example, the described apparatus embodiment is merely an example. For example, division into the modules or units is merely logical function division. During actual implementation, there may be another division manner. For example, a plurality of units or components may be combined or integrated into another apparatus, or some features may be ignored or not performed. In addition, the displayed or discussed mutual couplings or direct couplings or communication connections may be implemented through some interfaces, and the indirect couplings or communication connections between the apparatuses or units may be implemented through some interfaces. The replaced units may or may not be physically separate, and parts displayed as units may be one or more physical units, may be located in one place, or may be distributed in a plurality of different places. Some or all of the units may be selected based on actual requirements to achieve the objectives of the solutions in the embodiments.

In addition, the functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in the embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods in the embodiments of this application. The storage medium includes various media that can store program code, for example, a USB flash drive, a removable hard disk, a read-only memory (read only memory, ROM), a random access memory (random access memory, RAM), a magnetic disk, or an optical disc.

The foregoing content is merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. An antenna state control method, comprising:
obtaining a pre-state of a first communication system, wherein the pre-state is a state that the first communication system is to enter at a second moment after a first moment; and
if the pre-state is a non-working state, outputting a target antenna tuning parameter at the first moment, wherein the target antenna tuning parameter is used to indicate that an antenna tuning switch is in a target tuning state, the antenna tuning switch is configured to tune a tuning state of a first antenna of the first communication system, and in the target tuning state, antenna performance of a second antenna meets a preset performance requirement.

2. The method according to claim 1, wherein a time difference between the first moment and the second moment is less than or equal to a preset time difference threshold.

3. The method according to claim 2, wherein the non-working state is a sleep state when the first communication system is in an idle state or a radio resource control RRC connected state.

4. The method according to claim 2, wherein the non-working state is a sleep state in a network search cycle.

5. The method according to claim 2, wherein the non-working state is a state in an airplane mode.

6. The method according to claim 2, wherein the non-working state is that a second communication system corresponding to the second antenna is in a Bluetooth communication state.

7. The method according to any one of claims 3 to 6, wherein the outputting a target antenna tuning parameter at the first moment comprises:
outputting the target antenna tuning parameter to the antenna tuning switch by calling a close function at the first moment, wherein the close function is filled with the target antenna tuning parameter.

8. The method according to claim 2, wherein the non-working state is a sleep state in a network search cycle, and the outputting a target antenna tuning parameter at the first moment comprises:
searching for a target frequency band corresponding to the target tuning state at the first moment, to output the target antenna tuning parameter.

9. The method according to claim 1, wherein if the pre-state is a working state, the method further comprises:
determining that an electronic device is in a limited service state, and outputting the target antenna tuning parameter, to register a target frequency band corresponding to the target tuning state; and
if the registration succeeds, determining that the first communication system camps on the target frequency band.

10. The method according to any one of claims 1 to 6, before the obtaining a pre-state of a first communication system, further comprising:
determining whether a subscriber identity module card is present; and
if yes, performing the step of obtaining the pre-state of the first communication system; or
if no, outputting the target antenna tuning parameter.

11. The method according to claim 10, wherein the outputting the target antenna tuning parameter comprises:
reporting a message indicating that the subscriber identity module card is not present to a microcontroller unit MCU;
receiving a power-off instruction returned by the MCU based on the message indicating that the subscriber identity module card is not present; and
in response to the power-off instruction, outputting the target antenna tuning parameter and then powering off.

12. The method according to any one of claims 1 to 6, wherein that in the target tuning state, antenna performance of a second antenna meets a preset performance requirement comprises:
in the target tuning state, antenna efficiency of the second antenna is higher than antenna efficiency in another tuning state, wherein the another tuning state is a tuning state of the antenna tuning switch, and the another tuning state is different from the target tuning state.

13. A chip, wherein the chip comprises a processor, and the processor is configured to perform the method according to any one of claims 1 to 12.

14. An electronic device, comprising a processor, a memory, and an interface, wherein
the processor, the memory, and the interface cooperate with each other, to enable the electronic device to perform the method according to any one of claims 1 to 12.

15. The electronic device according to claim 14, wherein the electronic device is a wearable device.

16. A computer-readable storage medium, wherein the computer-readable storage medium stores a computer program, and when the computer program is executed by a processor, the processor is enabled to perform the method according to any one of claims 1 to 12.
